# EUROPÄISCHE PATENTSCHRIFT

(11) **EP 2 447 551 B1**
(45) Veröffentlichungstag und Bekanntmachung des Hinweises auf die Patenterteilung: **09.03.2016**
(21) Anmeldenummer: 11184074.0
(22) Anmeldetag: 06.10.2011
(51) Int. Cl.: F16B 27/00

(54) **Magaziniervorrichtung und dafür vorgesehener Magazinierstreifen**
Magazining device and magazining strip for same
Dispositif de magazinage et bande de magazinage prévue à cet effet

(30) Priorität: 28.10.2010 DE 102010060239
(43) Veröffentlichungstag der Anmeldung: 02.05.2012
(73) Patentinhaber: SFS intec Holding AG, 9435 Heerbrugg (CH)
(72) Erfinder: Giust, Mauro, 33077 Sacile (IT)

(56) Entgegenhaltungen:
- DE-A1- 4 344 679
- DE-C1- 4 424 750
- US-A- 4 606 455

## Beschreibung

Die Erfindung betrifft eine Magaziniervorrichtung mit einem im Querschnitt im Wesentlichen U-förmigen Magazinierstreifen, welcher einen Boden und zwei Wände mit paarweise einander gegenüberliegenden Aufnahmeöffnungen für stabförmige Teile aufweist, und mit einer Rückhalteeinrichtung für die stabförmigen Teile in den Aufnahmeöffnungen.

Außerdem betrifft die Erfindung einen für die Magaziniervorrichtung vorgesehenen Magazinierstreifen.

Bei bekannten Magaziniervorrichtungen, die einen Magazinier- oder Schraubenstreifen umfassen und z. B. aus den Dokumenten DE 29 07 486 C, EP 320 186 B, DE 76 39 013 U1 bekannt sind, geht es darum, Befestiger parallel zueinander und in einer Reihe ausgerichtet zu halten und in dieser Form einem Einschraubgerät zuzuführen. Im Einschraubgerät wird jeder Befestiger dann durch Eindrehen in einen Untergrund und durch zumindest teilweises Zerstören des Magazinierstreifens aus diesem herausgelöst. Solche Magazinierstreifen bilden daher nicht nur Verpackungselemente, sondern werden auch als Halterung der Befestiger bis unmittelbar vor der Verarbeitung in einem Einschraubgerät benötigt. Die Befestiger werden in dem Magazinierstreifen entsprechend stabil gehalten und können nicht ohne Weiteres quer zu diesem herausgelöst werden, es sei denn, dass entsprechender Kraftaufwand ausgeübt wird. Eine aus dem Dokument DE 43 44 679 A1 bekannte Verpackung ist deshalb so ausgebildet, dass sie nur als ein Mittel zum geordneten Transport und zum Einführen in ein entsprechendes Magazin dient, jedoch in einfacher Weise von den gehaltenen stabförmigen Teilen, z.B. Befestigen, entfernbar ist. Zu diesem Zweck ist bei der bekannten Verpackung, welcher die Magaziniervorrichtung der eingangs genannten Art entspricht, der Deckstreifen, welcher die stabförmigen Teile abdeckt, mit dem Magazinierstreifen entlang von zwei Perforationslinien verbunden.

Die Verpackung kann in einfacher Weise von den stabförmigen Teilen entfernt werden, indem der Deckstreifen entlang von Perforationslinien von beiden Wänden des Magazinierstreifens abgerissen wird. Der Deckstreifen ist einstückig mit dem Magazinierstreifen ausgebildet. Die Perforationslinien oder allgemein Schwächungslinien sind zwischen den Wänden und dem Deckstreifen ausgebildet. Der Magazinierstreifen bildet zusammen mit dem Deckstreifen ein einstückiges Teil, welches umfangsgeschlossen ausgeführt ist. Die bekannte Verpackung wird aus einem flächigen Material gefertigt, wobei nach der Herstellung der Aufnahmeöffnungen und der Perforationslinien sowie der Vorfertigung von Abbiegekanten zwischen dem Deckstreifen und den Wänden zwei abgebogene Randstreifen vorhanden sind, die einander überlappend miteinander verklebt werden, um dadurch den mit dem Deckstreifen versehenen, im Querschnitt im Wesentlichen U-förmigen Magazinierstreifen zu bilden, der im Querschnitt rechteckig ist. Der Deckstreifen könnte auch in Längsrichtung geteilt ausgebildet sein, so dass sich an jede Wand des im Querschnitt im Wesentlichen U-förmigen Magazinierstreifens ein schmaler Deckstreifen anschließen würde und somit dann eben zwei solche Deckstreifen abgerissen werden müssten. Bei der fertiggestellten Verpackung sind in beiden Fällen die Aufnahmeöffnungen durch den bzw. jeweils durch einen Deckstreifen verschlossen, so dass das Befüllen der Magaziniervorrichtung nur so erfolgen kann, dass die stabförmigen Bauteile quer zur Streifenlängsrichtung jeweils einzeln durch paarweise einander gegenüberliegende Öffnungen eingeschoben werden. Diese Art der Befüllung der Verpackung, bei der der Magazinierstreifen bereits mit dem (den) Deckstreifen versehen ist, ist nicht einfach, insbesondere dann nicht, wenn die stabförmigen Teile, die zu magazinieren sind, Teile von Beschlägen wie z.B. Tür- oder Fensterbändem sind. Das Herstellen der fertigen Verpackung selbst ist ebenfalls nicht einfach, weil ein zusätzlicher Klebevorgang erforderlich ist, um die im Querschnitt rechteckige Verpackung herzustellen. Wenn die Verpackung mit zwei schmalen Deckstreifen statt mit einem durchgehenden breiten Deckstreifen versehen ist, lässt sich der zusätzliche Arbeitsgang des Verklebens zwar vermeiden, dafür ist aber das Entleeren der Verpackung weniger einfach, weil zwei Deckstreifen abgerissen werden müssen.

Ein Türen- oder Fensterproduzent wird die angelieferten Bänder in ein Zuführungssystem an einer Maschine einfüllen. Um diesen Vorgang zu erleichtern, sollten die Bänder so wie die stabförmigen Teile oder Befestiger bei den oben beschriebenen bekannten Magaziniervorrichtungen magaziniert sein, damit sie dem Zuführungssystem schnell und einfach zugeleitet werden können. Das Magazin muss bei der Verarbeitung von Beschlägen wie Tür- oder Fensterbändem besonders formstabil sein, weil solche Beschläge nicht symmetrisch wie ein stabförmiger Befestiger ausgebildet sind, sondern eine ungleiche Gewichtsverteilung aufweisen und dadurch die Magaziniervorrichtung unsymmetrisch belasten. Außerdem sollte die Magaziniervorrichtung eine vollautomatische Herstellung des Magazinierstreifens, das anschließende Einfüllen von Bändern und das anschließende Abpacken in Großverpackungen ermöglichen.

Bei einem Trägerstreifen, der aus dem Dokument DE 31 41 844 A1 bekannt ist, ist ein U-förmiger Querschnitt nur in dem Bereich von einem Paar Öffnungen vorhanden, die stabförmige Teile aufnehmen. Dem Trägerstreifen fehlt daher die für eine Magaziniervorrichtung erforderliche Formstabilität. Der bekannte Trägerstreifen ist in den Bereichen zwischen den Öffnungspaaren jeweils auf der gemeinsamen Mittellinie eines Schlitzes und einer weiteren Öffnung flach und daher leicht biegsam. Es fehlt ihm dort jegliche Profilierung, die das Biegen verhindern könnte. Dieses Biegen soll bei dem bekannten Trägerstreifen auch nicht verhindert werden, denn es wird geradezu als ein besonderer Vorteil angesehen, dass sich jeweils zwischen zwei Öffnungspaaren im Trägerstreifen ein flacher Querschnitt erstreckt, so dass seine beiden abgebogenen Ränder nicht etwa jeweils aus einer durchgehenden Wand bestehen, sondern aus einer Vielzahl von Randzungen, so dass der Trägerstreifen mit den gehalterten Stiften leicht aufgewickelt werden kann. Dieses Aufwickeln mag bei der Verwendung von solchen Trägerstreifen in Stanz- Biegeautomaten zwar vorteilhaft sein, um an den Stiften noch Bearbeitungen vorzunehmen zu können, jedoch wird mit einer Magaziniervorrichtung, auf die sich die Erfindung bezieht, das Gegenteil angestrebt, nämlich eine hohe Formstabilität des Magazinierstreifens..

Aufgabe der Erfindung ist es, eine Magaziniervorrichtung der eingangs genannten Art so auszubilden, dass sie einfacher herstellbar ist und/oder die stabförmigen Teile auf einfachere Weise durch die Rückhalteeinrichtung freigegeben werden können.

Diese Aufgabe ist erfindungsgemäß ausgehend von einer Magaziniervorrichtung der eingangs genannten Art dadurch gelöst, dass die Rückhalteeinrichtung an wenigstens einer der Wände ausgebildete Rückhalteelemente umfasst, welche jeweils als ein fingerartiger Wandfortsatz zwischen zwei in Längsrichtung benachbarten Aufnahmeöffnungen ausgebildet und jeweils in einen Bereich zwischen den Wänden umlegbar oder umgelegt sind.

Die Magaziniervorrichtung nach der Erfindung erlaubt, die stabförmigen Teile auf leichtere Art und Weise in ein Zuführsystem an einer Maschine einzufüllen. Die Magaziniervorrichtung ist ausreichend formstabil und hält die magazinierten stabförmigen Teile auch nach dem Transport noch verliersicher fest. Die stabförmigen Teile können einfach aus der Magaziniervorrichtung gelöst werden, indem die umgelegten Rückhalteelemente einfach in ihre Ausgangsstellung, in der sie mit der Wand, an der sie ausgebildet sind, in einer Ebene liegen, zurückgebogen werden. Dafür ist nur ein geringer Kraftaufwand nötig. Die Magaziniervorrichtung nach der Erfindung kann nämlich z. B. aus Aluminium oder einer Aluminiumlegierung bestehen, die sich für die vorstehend beschriebenen Zwecke bestens eignet. Darüber hinaus kommt die Magaziniervorrichtung nach der Erfindung zur verliersicheren Halterung der stabförmigen Teile mit einer Rückhalteeinrichtung aus, die nur die vorgenannten Rückhalteelemente umfasst, aber keinen Deckstreifen. Ein solcher Deckstreifen kann in einer Ausgestaltung der Erfindung zwar verwendet werden, er ist in diesem Fall jedoch ein mit den Wänden des Magazinierstreifens nicht verbundener Schnelllösestreifen, der z.B. herausziehbar ist und somit einfacher lösbar als ein Deckstreifen der oben genannten Art ist.

Darüber hinaus lässt die erfindungsgemäße Ausbildung der Magaziniervorrichtung eine vollautomatische Herstellung der Stanz-/Biegegeometrie des Magazinierstreifens zu. Durch einen Magazinierstreifen mit einem U-Profil mit einer dünnen Wandstärke relativ zur Gewindegeometrie an einem stabförmigen Teil eines zu magazinierenden Beschlages können die stabförmigen Teile verliersicher in dem U-Profil gehalten werden. Der Werkstoff wird so gewählt, dass die Magaziniervorrichtung die gewünschte hohe Formstabilität hat, selbstverständlich feuchtebeständig ist und das Umlegen der Rückhalteelemente der Rückhalteeinrichtung einfach durch Umbiegen gestattet.

Vorteilhafte Ausgestaltungen der Magaziniervorrichtung nach der Erfindung bilden die Gegenstände der abhängigen Ansprüche.

In einer Ausgestaltung der Magaziniervorrichtung nach der Erfindung ist der Magazinierstreifen einstückig stanzbar ausgeführt. Es sind in dieser Ausgestaltung dann lediglich noch Biegevorgänge erforderlich, um den Magazinierstreifen in die passende Form zum verliersicheren Halten der stabförmigen Elemente zu bringen, aber keinerlei Klebevorgang.

In einer weiteren Ausgestaltung der Magaziniervorrichtung nach der Erfindung erstreckt sich jeder fingerartige Wandfortsatz von seiner Wand aus unter einem spitzen Winkel zur Streifenlängsrichtung. Bei befülltem Magazinierstreifen erstreckt sich jeder fingerartige Wandfortsatz von seiner Wand aus schräg über ein benachbartes stabförmiges Teil, um dieses in seinen quer zur Streifenlängsrichtung benachbarten beiden Aufnahmeöffnungen festzuhalten. Das ist die einfachste Art der Halterung der stabförmigen Teile in dem Magazinierstreifen, weil für jedes stabförmige Teil nur ein Rückhalteelement benötigt wird, das durch Umbiegen auf ein benachbartes stabförmiges Teil umlegbar ist.

In einer anderen Ausgestaltung der Magaziniervorrichtung nach der Erfindung erstreckt sich jeder fingerartige Wandfortsatz von seiner Wand aus im Wesentlichen rechtwinkelig zur Streifenlängsrichtung. Jeder fingerartige Wandfortsatz erstreckt sich also über einen Zwischenraum zwischen zwei in Streifenlängsrichtung benachbarten Aufnahmeöffnungspaaren.

In einer weiteren Ausgestaltung der Magaziniervorrichtung nach der Erfindung weist jeder fingerartige Wandfortsatz einen an seinem freien Ende angeformten Querfortsatz auf. In Kombination mit der vorgenannten Ausgestaltung ermöglicht das, jedes stabförmige Teil noch sicherer festzuhalten.

In einer weiteren Ausgestaltung der Magaziniervorrichtung nach der Erfindung ist der gestanzte Magazinierstreifen durch Biegen in den Magazinierstreifen mit im Wesentlichen U-förmigem Querschnitt umformbar. Der Magazinierstreifen der Magaziniervorrichtung ist so auf einfache Weise aus seinem gestanzten Zustand in den Zustand überführbar, in welchem der Querschnitt des Magazinierstreifens im Wesentlichen U-förmig ist.

In einer weiteren Ausgestaltung der Magaziniervorrichtung nach der Erfindung umfasst die Rückhalteeinrichtung weiterhin einen zwischen oder unter den fingerartigen Wandfortsätzen einlegbaren Deckstreifen. Bei allen vorgenannten Ausgestaltungen der Magaziniervorrichtung nach der Erfindung kann der Deckstreifen auf die nach dem Befüllen in dem Magazinierstreifen befindlichen stabförmigen Teile aufgelegt werden. Anschließend können die Rückhalteelemente jeweils in einen Bereich zwischen den Wänden umgelegt werden. Die schrägen Rückhalteelemente stützen dann den Deckstreifen auf den stabförmigen Teilen ab. Die rechtwinkelig zur Streifenlängsrichtung ausgebildeten Rückhalteelemente werden auf den Deckstreifen jeweils zwischen zwei benachbarten stabförmigen Teilen umgelegt, so dass die stabförmigen Teile in den Aufnahmeöffnungen allein durch den Deckstreifen festgehalten werden.

In einer weiteren Ausgestaltung der Magaziniervorrichtung nach der Erfindung sind bei der vorgenannten Ausgestaltung die fingerartigen Wandfortsätze an den Deckstreifen andrückbar, um so den Deckstreifen und mit diesem die darunter befindlichen stabförmigen Teile in dem Magazinierstreifen festzuhalten.

In einer weiteren Ausgestaltung der Magaziniervorrichtung nach der Erfindung ist der Deckstreifen als ein separates Teil ausgebildet. Das erlaubt, wenn die stabförmigen Teile aus dem Magazinierstreifen entnommen werden sollen, einfach den Deckstreifen in Streifenlängsrichtung aus dem befüllten Magazinierstreifen herauszuziehen. In dem Fall, in welchem sich jedes Rückhalteelement von seiner Wand aus im Wesentlichen rechtwinkelig zur Streifenlängsrichtung über einen Zwischenraum zwischen zwei in Streifenlängsrichtung benachbarten Aufnahmeöffnungspaaren erstreckt, sind die stabförmigen Teile bereits zur Entnahme aus dem Magazinierstreifen freigegeben, sobald der Deckstreifen herausgezogen worden ist.

In einer weiteren Ausgestaltung der Magaziniervorrichtung nach der Erfindung ist der Deckstreifen an einer der Wände angeformt und von der Wand entlang einer Schwächungslinie abtrennbar ausgebildet. Die Schwächungslinie kann eine Linie sein, längs welcher der Querschnitt des Magazinierstreifens an seinem Übergang zu dem Deckstreifen verringert oder der Deckstreifen an dieser Stelle perforiert ist. In dieser Ausgestaltung ist zwar auch ein Abreißvorgang erforderlich, aber es ist eben nur ein Deckstreifen abzureißen statt eines Deckstreifens längs zwei Perforationslinien oder statt zwei einzelner Deckstreifen längs zwei Perforationslinien wie bei der eingangs genannten bekannten Verpackung.

In einer weiteren Ausgestaltung der Magaziniervorrichtung nach der Erfindung sind die fingerartigen Wandfortsätze an beiden Wänden und so ausgebildet, dass jeweils zwei einander quer zur Streifenlängsrichtung benachbarte Wandfortsätze in Streifenlängsrichtung um wenigstens eine Wandfortsatzbreite gegeneinander versetzt sind. Das ermöglicht, die Haltewirkung der fingerartigen Wandfortsätze durch entsprechende Wahl von deren Länge zu beeinflussen, vorzugsweise bei Verwendung eines zwischen den fingerartigen Wandfortsätzen und den stabförmigen Teilen eingelegten Deckstreifens.

In einer weiteren Ausgestaltung der Magaziniervorrichtung nach der Erfindung ist die Abmessung jeder Aufnahmeöffnung quer zur Streifenlängsrichtung kleiner als in Streifenlängsrichtung. Überdies ist die Größe der Aufnahmeöffnung in Relation zu dem Durchmesser der stabförmigen Teile so bemessen, dass jedes in eine Aufnahmeöffnung eingesetzte stabförmige Teil mit seinem halben Querschnitt über den oberen Rand der Wand des Magaziniserstreifens übersteht. Diese Ausgestaltung der Magaziniervorrichtung wird zweckmäßig mit dem Einsatz eines Deckstreifens kombiniert, der sich wellenförmig über die stabförmigen Teile legt und diese zusammen mit den Rückhalteelementen noch sicherer festhält, als es die Rückhaltelemente allein könnten.

In einer weiteren Ausgestaltung der Magaziniervorrichtung nach der Erfindung sind die Aufnahmeöffnungen V-förmig ausgebildet. Das erlaubt, stabförmige Teile unterschiedlichen Durchmessers in die Magaziniervorrichtung aufzunehmen.

In einer weiteren Ausgestaltung der Magaziniervorrichtung nach der Erfindung sind die stabförmigen Teile jeweils ein stabförmiger Teil eines Beschlages für ein Fenster, eine Tür od. dgl. Üblicherweise sind Bauteile wie Beschläge dieser Art in einer Magaziniervorrichtung nicht einfach verliersicher festzuhalten. Die Magaziniervorrichtung nach der Erfindung ist für solche Beschläge, die einen stabförmigen Teil aufweisen, aber bestens geeignet.

In einer weiteren Ausgestaltung der Magaziniervorrichtung nach der Erfindung sind die Aufnahmeöffnungen in Streifenlängsrichtung gegenseitig so beabstandet, dass sich benachbarte Beschläge gegenseitig berühren. Die benachbarten Beschläge berühren sich dabei nicht mit ihren stabförmigen Teilen, sondern mit anderen Teilen, die z.B. einen größeren Durchmesser als die stabförmigen Teile aufweisen und in gegenseitige Berührung kommen, wenn sie in dem Magazinierstreifen nebeneinander angeordnet werden.

In einer weiteren Ausgestaltung der Magaziniervorrichtung nach der Erfindung besteht der Magazinierstreifen aus einem feuchtebeständigen Material wie Leichtmetall oder Kunststoff. In dem einen oder dem anderen Fall wird das Material so gewählt, dass die Rückhalteelemente einfach umlegbar und bei Bedarf wieder, zurückbiegbar sind.

In einer weiteren Ausgestaltung der Magaziniervorrichtung nach der Erfindung besteht der Deckstreifen aus einem feuchtebeständigen Material wie Leichtmetall oder Kunststoff. So ist es möglich, bei einem Magazinierstreifen aus Kunststoff einen Deckstreifen aus Metall, oder umgekehrt, zu verwenden, obgleich die bevorzugte Variante darin besteht, den Magazinierstreifen und den Deckstreifen aus dem gleichen Material herzustellen.

Schließlich schafft die Erfindung einen Magazinierstreifen mit den Merkmalen nach einem der Patentansprüche.

Ausführungsbeispiele der Erfindung werden im Folgenden unter Bezugnahme auf die Zeichnungen näher beschrieben. Es zeigt:
- Fig. 1: eine erste Ausführungsform der Magaziniervorrichtung nach der Erfindung, mit darin aufgenommenen Beschlägen, in Fig. 1a in einer Längsseitenansicht, in Fig. 1b in einer Draufsicht und in Fig. 1c in einer Vorderansicht,
- Fig. 2a: als eine Einzelheit einen Magazinierstreifen der Magaziniervorrichtung nach Fig. 1 im Ausgangszustand nach dem Stanzen,
- Fig. 2b: in einer perspektivischen Darstellung den Magazinierstreifen nach Fig. 2a nach dem Biegen zu einem Streifen mit im Wesentlichen U-förmigem Querschnitt,
- Fig. 2c: einen Magazinierstreifen einer zweiten Ausführungsform der Magaziniervorrichtung nach der Erfindung im Ausgangszustand nach dem Stanzen,
- Fig. 3: eine dritte Ausführungsform der Magaziniervorrichtung nach der Erfindung, mit darin aufgenommenen Beschlägen, in Fig. 3a in einer Längsseitenansicht, in Fig. 3b in einer Draufsicht und in Fig. 3c in einer Vorderansicht,
- Fig. 4: den Magazinierstreifen der Magaziniervorrichtung nach Fig. 3 ohne die Beschläge, in Fig. 4a in einer Längsseitenansicht und in Fig. 4b in einer perspektivischen Darstellung,
- Fig. 5: als eine Einzelheit einen Deckstreifen der Magaziniervorrichtung nach Fig. 3, in gewelltem Zustand in Fig. 5a in einer Draufsicht, in Fig. 5b in einer Längsseitenansicht und in Fig. 5c in einer perspektivischen Darstellung, und in ungewelltem Zustand in Fig. 5d in einer Draufsicht,
- Fig. 6: eine vierte Ausführungsform der Magaziniervorrichtung nach der Erfindung, mit darin aufgenommenen Beschlägen, in Fig. 6a in einer Längsseitenansicht, in Fig. 6b in einer Draufsicht und in Fig. 6c in einer Vorderansicht,
- Fig. 7: eine fünfte Ausführungsform der Magaziniervorrichtung nach der Erfindung, mit darin aufgenommenen Beschlägen, in Fig. 7a in einer Längsseitenansicht, in Fig. 7b in einer Draufsicht und in Fig. 7c in einer Vorderansicht und
- Fig. 8: eine sechste Ausführungsform der Magaziniervorrichtung nach der Erfindung, mit darin aufgenommenen Beschlägen, in Fig. 8a in einer Längsseitenansicht, in Fig. 8b in einer Draufsicht und in Fig. 8c in einer Vorderansicht.

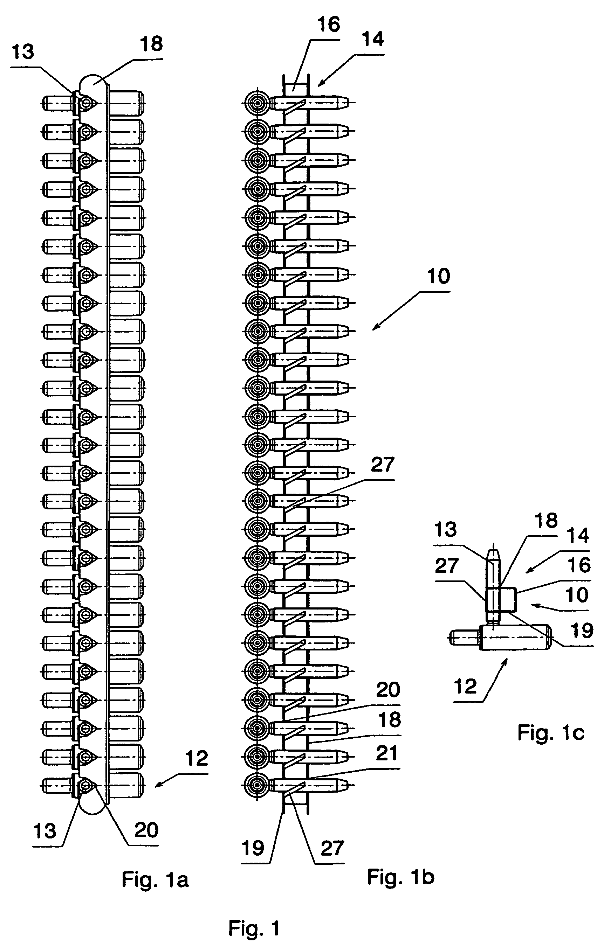

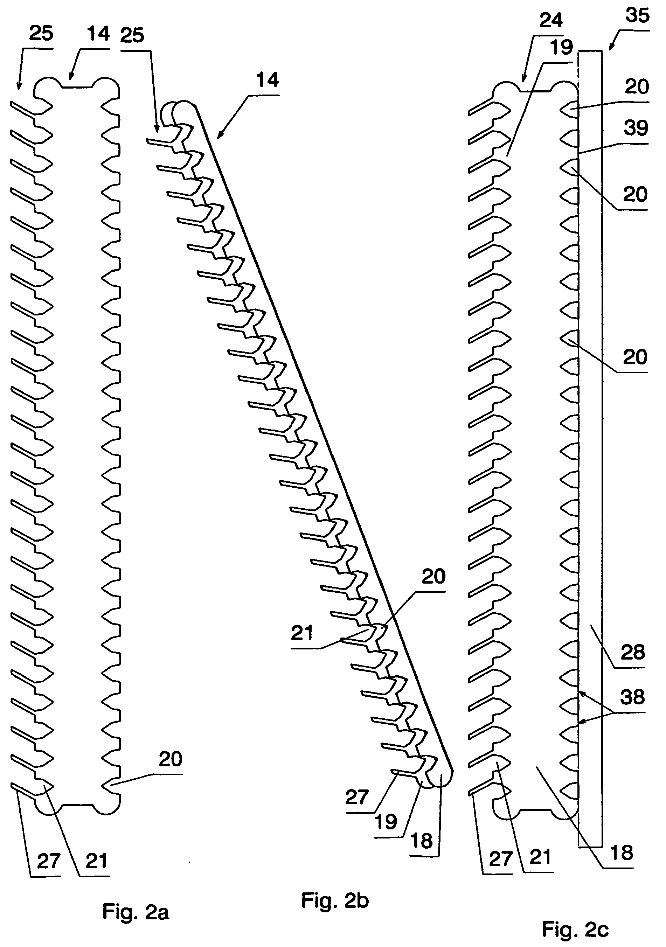

Eine erste Ausführungsform der Magaziniervorrichtung nach der Erfindung ist in Fig. 1 dargestellt und insgesamt mit 10 bezeichnet. Die Magaziniervorrichtung 10 ist mit darin aufgenommenen Beschlägen 12 in Fig. 1a in einer Längsseitenansicht, in Fig. 1b in einer Draufsicht und in Fig. 1c in einer Vorderansicht gezeigt. In Fig. 2 ist als eine Einzelheit ein Magazinierstreifen 14 der Magaziniervorrichtung 10 nach Fig. 1 gezeigt. Der Magazinierstreifen 14 ist im Querschnitt im Wesentlichen U-förmig und hat gemäß Fig. 1 einen Boden 16 und zwei Wände 18, 19. Der Magazinierstreifen 14 ist einstückig stanzbar ausgeführt. In Fig. 2a ist als eine Einzelheit der Magazinierstreifen 14 im Ausgangszustand nach dem Stanzen gezeigt. Fig. 2b zeigt in einer perspektivischen Darstellung den Magazinierstreifen 14 nach dem Biegen zu einem Streifen mit im Wesentlichen U-förmigem Querschnitt. Die Wände 18, 19 weisen paarweise einander gegenüberliegende Aufnahmeöffnungen 20, 21 für stabförmige Teile 13 auf. Die stabförmigen Teile 13 sind hier jeweils ein stabförmiger Teil des Beschlages 12. Im vorliegenden Fall handelt es sich bei den Beschlägen 12 um Beschläge für ein Fenster oder eine Tür. Den Aufnahmeöffnungen 20, 21 ist eine in Fig. 2a insgesamt mit 25 bezeichnete Rückhalteeinrichtung für die stabförmigen Teile 13 zugeordnet. Die Rückhalteeinrichtung 25 umfasst an der Wand 19 ausgebildete Rückhalteelemente 27, welche jeweils als ein fingerartiger Wandfortsatz ausgebildet sind, der an einem Steg zwischen zwei in Längsrichtung benachbarten Aufnahmeöffnungen 20 ausgebildet ist. In den hier beschriebenen Ausführungsbeispielen besteht der Magazinierstreifen 14 aus Aluminiumblech. Er könnte stattdessen aus Kunststoff oder einem anderen Leichtmetall bestehen. Jedes Rückhalteelement 27 ist durch Umbiegen in einen Bereich zwischen den Wänden 18, 19 umlegbar, wie es in Fig. 1b zu erkennen ist. Bei der Magaziniervorrichtung 10 erstreckt sich jedes Rückhalteelement 27, also jeder fingerartige Wandfortsatz von seiner Wand 19 aus unter einem spitzen Winkel zur Streifenlängsrichtung, wie es in den Fig. 1b, 2a und 2b zu erkennen ist. Die Rückhalteelemente 27 erstrecken sich zunächst in der gleichen Ebene wie die Wand 19 in der Darstellung in Fig. 2b. Nach dem Einlegen des stabförmigen Teils 13 eines Beschlages 12 in zwei quer zur Streifenlängsrichtung benachbarte Aufnahmeöffnungen 20, 21 werden die Rückhalteelemente 27 auf die stabförmigen Teile 13 umgebogen, wie es in Fig. 1 gezeigt ist. Bei dem Magazinierstreifen 14 der Magaziniervorrichtung 10 ist die Abmessung jeder Aufnahmeöffnung 20, 21 quer zur Streifenlängsrichtung ebenso groß wie in Streifenlängsrichtung. Die Aufnahmeöffnungen 20, 21 sind V-förmig ausgebildet, und zwar so, dass jedes stabförmige Teil 13 in seinen Aufnahmeöffnungen 20, 21 mit der Oberseite der zugeordneten Wand 18 bzw. 19 jeweils im Wesentlichen bündig ist, wie es in den Fig. 1 a und 1 c zu erkennen ist.

Fig. 2c zeigt als eine Einzelheit einer im Übrigen nicht dargestellten zweiten Ausführungsform der Magaziniervorrichtung nach der Erfindung einen Magazinierstreifen 24 im Ausgangszustand nach dem Stanzen. Bei dieser Ausführungsform und bei den im Folgenden beschriebenen Ausführungsformen sind gleiche Teile wie bei der Magaziniervorrichtung 10 mit gleichen Bezugszahlen versehen. Lediglich unterschiedliche Teile werden anders nummeriert. Die zweite Ausführungsform hat eine Rückhalteeinrichtung 35, die an der Wand 19 ausgebildete Rückhaltelemente 27 umfasst, welche jeweils als ein fingerartiger Wandfortsatz zwischen zwei in Längsrichtung benachbarten Aufnahmeöffnungen 21 ausgebildet sind. Weiter hat bei der zweiten Ausführungsform die Rückhalteeinrichtung 25 einen schmalen Randstreifen 28, der an der Wand 18 des Magazinierstreifens 34 angeformt und von der Wand 18 entlang einer Schwächungslinie 38 abtrennbar ausgebildet ist. Die Schwächungslinie 38 wird durch Perforierungen 39 in den Stegen zwischen jeweils zwei benachbarten Aufnahmeöffnungen 20 dort gebildet, wo der Randstreifen 28 mit dem übrigen Magazinierstreifen 34 verbunden ist.

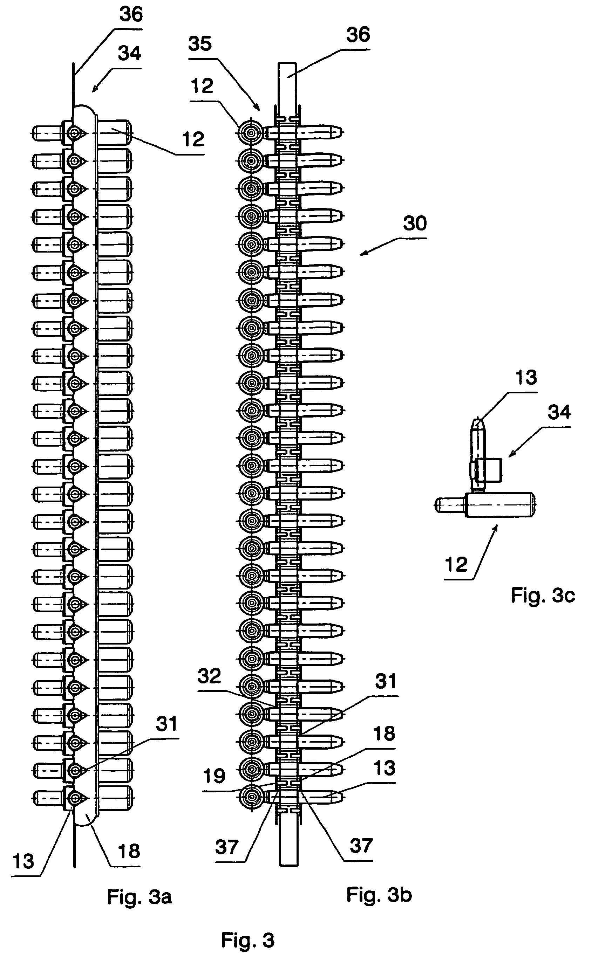

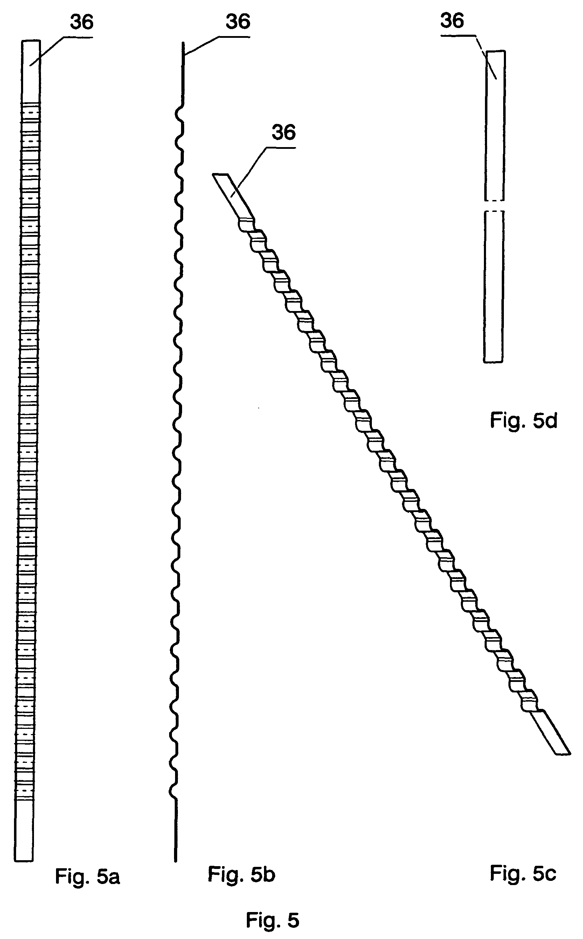

Fig. 3 zeigt eine dritte Ausführungsform der Magaziniervorrichtung nach der Erfindung, die insgesamt mit 30 bezeichnet ist, mit darin aufgenommenen Beschlägen 12, und zwar in Fig. 3a in einer Längsseitenansicht, in Fig. 3b in einer Draufsicht und in Fig. 3c in einer Vorderansicht. Die Magaziniervorrichtung 30 unterscheidet sich von der Magaziniervorrichtung 10 hauptsächlich dadurch, dass sich fingerartige Wandfortsätze 37 direkt einander gegenüber liegend von jeder Wand 18, 19 aus im Wesentlichen rechtwinkelig zur Streifenlängsrichtung erstrecken und dass die Rückhalteinrichtung 35 weiter einen zwischen oder unter den fingerartigen Wandfortsätzen 37 einlegbaren Deckstreifen 36 umfasst. In Fig. 3 sind die fingerartigen Wandfortsätze 37 jeweils zwischen zwei in Streifenlängsrichtung benachbarten Aufnahmeöffnungspaaren an den Deckstreifen 36 angedrückt. Bei dem Magazinierstreifen 34 ist die Abmessung jeder Aufnahmeöffnung 31, 32 quer zur Streifenlängsrichtung kleiner als in Streifenlängsrichtung. Die Aufnahmeöffnungen 31, 32 sind somit flacher als die Aufnahmeöffnungen 20, 21, und zwar derart, dass die stabförmigen Teile 13 nur zur Hälfte in jeder Aufnahmeöffnung 31, 32 versenkt sind, wie es in Fig. 3a zu erkennen ist. Bevor die fingerartigen Wandfortsätze 37 in den Bereich zwischen den Wänden 18, 19 umgelegt werden, wird, nachdem die stabförmigen Teile 13 in die Aufnahmeöffnungen 31, 32 eingesetzt worden sind, der Deckstreifen 36 über dem Bereich zwischen den Wänden 18,19 auf die stabförmigen Teile 13 aufgelegt. Wenn dann die fingerartigen Wandfortsätze 37 paarweise von beiden Wänden aus nach innen umgebogen und auf den Deckstreifen 36 gedrückt werden, nimmt dieser eine Wellenform an, die in der Darstellung in den Fig. 5a - 5c zu erkennen ist, welche als eine Einzelheit den Deckstreifen 36 der Magaziniervorrichtung 30 in gewelltem Zustand zeigt, und zwar in Fig. 5a in einer Draufsicht, in Fig. 5b in einer Längsseitenansicht und in Fig. 5c in einer perspektivischen Darstellung. In Fig. 5d ist der Deckstreifen 36 in seinem Ausgangszustand gezeigt, also in ungewelltem Zustand.

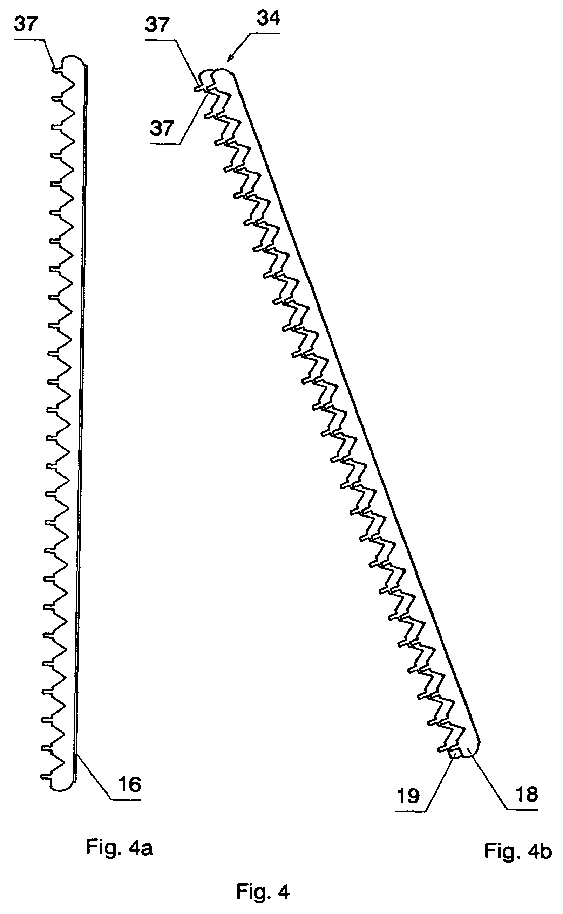

Fig. 4 zeigt den Magazinierstreifen 34 der Magaziniervorrichtung 30 ohne die Beschläge 12, und zwar in Fig. 4a in einer Längsseitenansicht und in Fig. 4b in einer perspektivischen Darstellung.

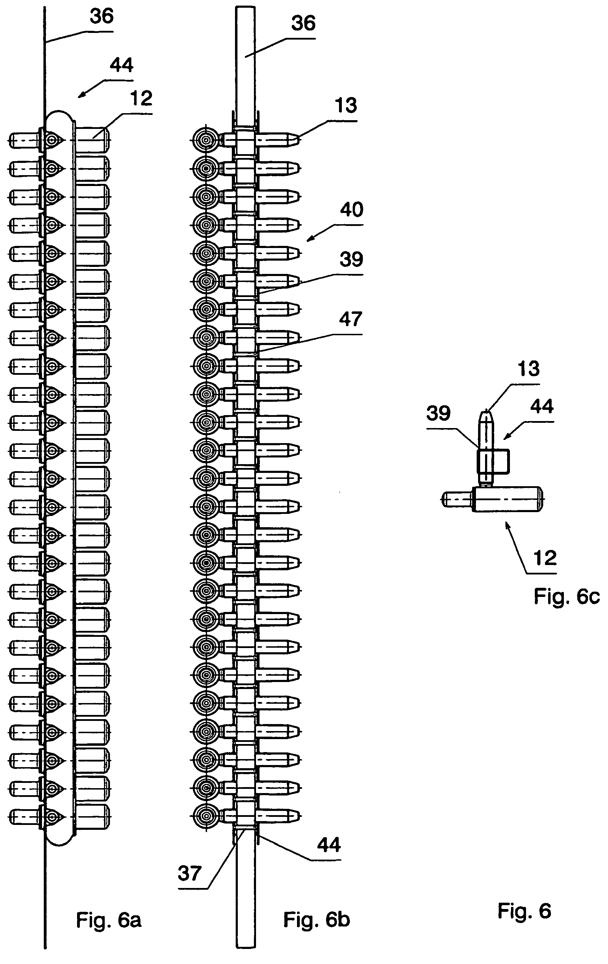

Fig. 6 zeigt eine vierte Ausführungsform der Magaziniervorrichtung nach der Erfindung, die insgesamt mit 40 bezeichnet ist, mit darin aufgenommenen Beschlägen 12, und zwar in Fig. 6a in einer Längsseitenansicht, in Fig. 6b in einer Draufsicht und in Fig. 6c in einer Vorderansicht. Die Magaziniervorrichtung 40 weist ebenfalls den Deckstreifen 36 auf, der hier allerdings ungewellt bleibt. Sie unterscheidet sich von der Magaziniervorrichtung 30 weiter hauptsächlich dadurch, dass nur an einer Wand fingerartige Wandfortsätze 37 ausgebildet sind, die sich rechtwinkelig zur Streifenlängsrichtung erstrecken. Die Wandfortsätze 37 sind so bemessen, dass sie sich über die gesamte Breite des Magazinierstreifens 44 erstrecken, wenn sie nach innen auf den Deckstreifen 36 umgelegt sind, wie es in Fig. 6b zu erkennen ist.

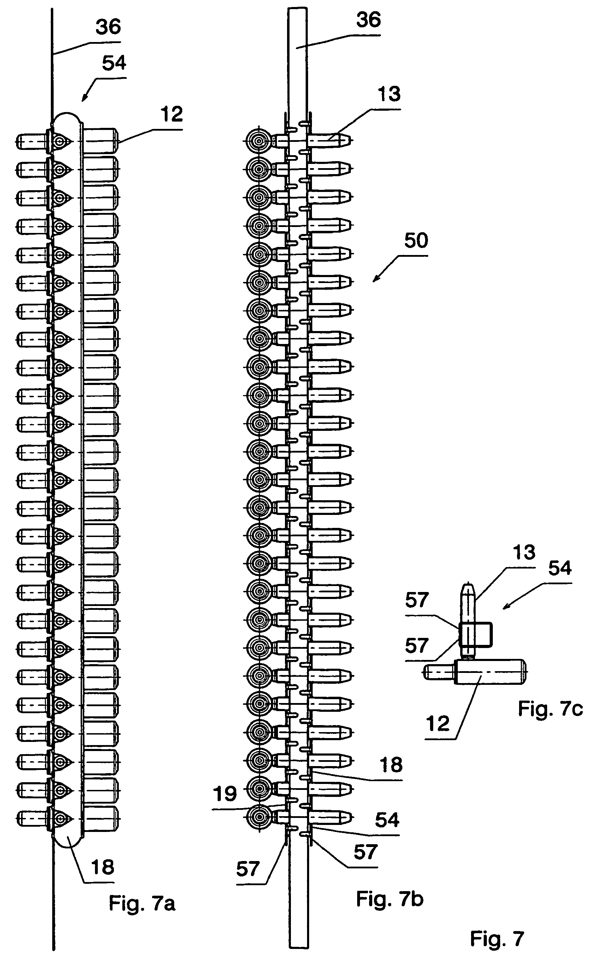

Fig. 7 zeigt eine fünfte Ausführungsform der Magaziniervorrichtung nach der Erfindung, die insgesamt mit 50 bezeichnet ist, und zwar in Fig. 7a in einer Längsseitenansicht, in Fig. 7b in einer Draufsicht und in Fig. 7c in einer Vorderansicht. Die Magaziniervorrichtung 50 umfasst ebenfalls den Deckstreifen 36, der ungewellt bleibt. Ihr Magazinierstreifen 54 unterscheidet sich von dem Magazinierstreifen 44 der Magaziniervorrichtung 30 nach Fig. 3 hauptsächlich dadurch, dass fingerartige Wandfortsätze 57 an beiden Wänden 18, 19 und so ausgebildet sind, dass jeweils zwei einander quer zur Streifenlängsrichtung benachbarte Wandfortsätze 57 in Streifenlängsrichtung um eine Wandfortsatzbreite gegeneinander versetzt sind, wie es in Fig. 7b zu erkennen ist. Jeder Wandfortsatz 57 reicht im umgebogenen Zustand, der in Fig. 7b gezeigt ist, etwa bis zur Mitte des Bereiches zwischen den Wänden 18, 19 und ist an den Deckstreifen 36 zwischen zwei benachbarten stabförmigen Teilen angedrückt. Der Deckstreifen 36 bleibt dabei ungewellt wie in Fig. 5d.

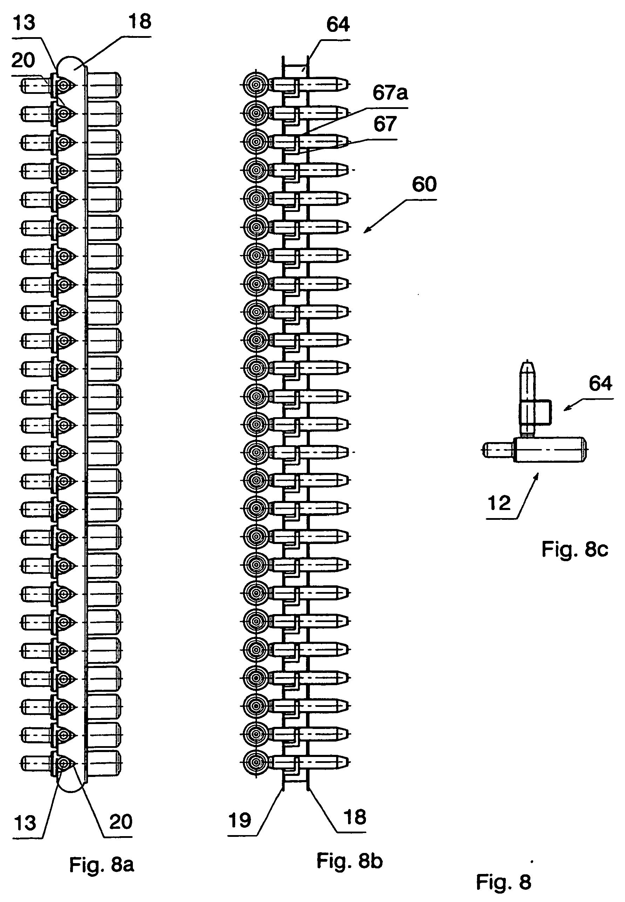

Fig. 8 zeigt eine sechste Ausführungsform der Magaziniervorrichtung nach der Erfindung, die insgesamt mit 60 bezeichnet ist, mit darin aufgenommenen Beschlägen 12, und zwar in Fig. 8a in einer Längsseitenansicht, in Fig. 8b in einer Draufsicht und in Fig. 8c in einer Vorderansicht. Sie unterscheidet sich von der Magaziniervorrichtung 10 hauptsächlich dadurch, dass sich von einer Wand 19 aus fingerartige Wandfortsätze 67 rechtwinkelig zur Streifenlängsrichtung über den Bereich zwischen den Wänden 18, 19 erstrecken, wie es in Fig. 8b zu erkennen ist. Darüber hinaus ist an jedem fingerartigen Wandfortsatz 67 an dessen freiem Ende ein Querfortsatz 67a angeformt, wie es ebenfalls in Fig. 8b zu erkennen ist. Die Aufnahmeöffnungen 31, 32 sind so tief ausgebildet, dass die stabförmigen Teile 13 mit der Oberseite der Wände 18, 19 bündig sind, wie es in Fig. 8a zu erkennen ist. Die Magaziniervorrichtung 60 könnte ebenso wie die Magaziniervorrichtung 10 nach Fig. 1 einen Deckstreifen 36 aufweisen (in den Fig. 1 und 8 jeweils nicht dargestellt), der aber dann durch die Wandfortsätze 27 bzw. 67 an die stabförmigen Teile 13 angedrückt und nicht zwischen den stabförmigen Teilen 13 niedergedrückt werden würde.

Wenn die Beschläge 12 aus jeder der vorstehend beschriebenen Magaziniervorrichtungen 10, 30, 40, 50, 60 gelöst werden sollen, wird bei den Ausführungsformen ohne den Deckstreifen 36 der Magazinierstreifen nach unten gedrückt, wodurch die Rückhalteelemente oder fingerartigen Fortsätze zurückgebogen werden, so dass sich der Magazinierstreifen von den Beschlägen 12 löst. Bei den Ausführungsformen mit dem Deckstreifen 36 wird einfach der Deckstreifen herausgezogen, wodurch der Magazinierstreifen von den Beschlägen 12 ohne Weiteres gelöst werden kann.

Es ist auch denkbar, die fingerartigen Wandfortsätze der Rückhalteeinrichtung an ihrer Verbindungsstelle mit dem Steg der zugeordneten Wand mit Perforierungen zu versehen (nicht dargestellt), so dass zum Entnehmen der stabförmigen Teile aus dem Magazinierstreifen die Wandfortsätze einfach abgeschert oder abgerissen werden könnten.

### Bezugszeichenliste

- 10: Magaziniervorrichtung
- 12: Beschlag
- 13: stabförmiges Teil
- 14: Magazinierstreifen
- 16: Boden
- 18: Wand
- 19: Wand
- 20: Aufnahmeöffnung
- 21: Aufnahmeöffnung
- 24: Magazinierstreifen
- 25: Rückhalteeinrichtung
- 27: Rückhalteelement
- 28: Randstreifen
- 30: Magaziniervorrichtung
- 31: Aufnahmeöffnung
- 32: Aufnahmeöffnung
- 34: Magazinierstreifen
- 35: Rückhalteeinrichtung
- 36: Deckstreifen
- 37: fingerartiger Wandfortsatz
- 38: Schwächungslinie
- 39: Perforierung
- 40: Magaziniervorrichtung
- 44: Magazinierstreifen
- 47: fingerartiger Wandfortsatz
- 50: Magaziniervorrichtung
- 54: Magazinierstreifen
- 57: fingerartiger Wandfortsatz
- 60: Magaziniervorrichtung
- 64: Magazinierstreifen
- 67: fingerartiger Wandfortsatz
- 67a: Querfortsatz

## Patentansprüche

1. Magaziniervorrichtung mit einem im Querschnitt im Wesentlichen U-förmigen Magazinierstreifen, welcher einen Boden und zwei Wände mit paarweise einander gegenüberliegenden Aufnahmeöffnungen für stabförmige Teile aufweist, und mit einer Rückhalteeinrichtung für die stabförmigen Teile in den Aufnahmeöffnungen,
**dadurch gekennzeichnet, dass** die Rückhalteeinrichtung (25, 35) an wenigstens einer der Wände (18, 19) ausgebildete Rückhalteelemente umfasst, welche jeweils als ein fingerartiger Wandfortsatz (27, 37, 47, 57, 67) an einem Steg zwischen zwei in Längsrichtung benachbarten Aufnahmeöffnungen (20, 21; 31, 32) ausgebildet und jeweils aus einer Ausgangsstellung, in der sie mit der Wand (18, 19), an der sie ausgebildet sind, in einer Ebene liegen, zum Festhalten der stabförmigen Teile (13) in einen Bereich zwischen den Wänden (18, 19) umlegbar oder umgelegt sind, aber zum Freigeben der stabförmigen Teile (13) in die Ausgangsstellung zurückbiegbar sind.

2. Magaziniervorrichtung nach Anspruch 1, **dadurch gekennzeichnet, dass** der Magazinierstreifen (14, 24, 34, 44, 54, 64) einstückig stanzbar ausgeführt ist.

3. Magaziniervorrichtung nach Anspruch 2, **dadurch gekennzeichnet, dass** sich jeder fingerartige Wandfortsatz (27) von seiner Wand aus unter einem spitzen Winkel zur Streifenlängsrichtung erstreckt.

4. Magaziniervorrichtung nach Anspruch 2, **dadurch gekennzeichnet, dass** sich jeder fingerartige Wandfortsatz (37, 67) von seiner Wand aus im Wesentlichen rechtwinkelig zur Streifenlängsrichtung erstreckt.

5. Magaziniervorrichtung nach Anspruch 4, **dadurch gekennzeichnet, dass** jeder fingerartige Wandfortsatz (67) einen an seinem freien Ende angeformten Querfortsatz (67a) aufweist.

6. Magaziniervorrichtung nach einem der Ansprüche 2 bis 5, **dadurch gekennzeichnet, dass** der gestanzte Magazinierstreifen durch Biegen in den Magazinierstreifen (14, 24, 34, 44, 54, 64) mit im Wesentlichen U-förmigem Querschnitt umformbar ist.

7. Magaziniervorrichtung nach einem der vorhergehenden Ansprüche, **dadurch gekennzeichnet, dass** die Rückhalteeinrichtung (25, 35) weiter einen zwischen oder unter den fingerartigen Wandfortsätzen (27, 37, 47, 57, 67) einlegbaren Deckstreifen (36) umfasst.

8. Magaziniervorrichtung nach Anspruch 7, **dadurch gekennzeichnet, dass** die fingerartigen Wandfortsätze (14, 24, 34, 44, 54, 64) an den Deckstreifen (36) andrückbar sind.

9. Magaziniervorrichtung nach Anspruch 7 oder 8, **dadurch gekennzeichnet, dass** der Deckstreifen (36) als ein separates Teil ausgebildet ist.

10. Magaziniervorrichtung nach Anspruch 7 oder 8, **dadurch gekennzeichnet, dass** der Deckstreifen als ein an einer der Wände angeformter und von der Wand entlang einer Schwächungslinie abtrennbarer Randstreifen (28) ausgebildet ist.

11. Magaziniervorrichtung nach einem der Ansprüche 1 bis 9, **dadurch gekennzeichnet, dass** die fingerartigen Wandfortsätze (37) an beiden Wänden (18, 19) und so ausgebildet sind, dass jeweils zwei einander quer zur Streifenlängsrichtung benachbarte Wandfortsätze in Streifenlängsrichtung um wenigstens eine Wandfortsatzbreite gegeneinander versetzt sind.

12. Magaziniervorrichtung nach einem der vorhergehenden Ansprüche, **dadurch gekennzeichnet, dass** die Abmessung jeder Aufnahmeöffnung (31, 32) quer zur Streifenlängsrichtung kleiner als in Streifenlängsrichtung ist.

13. Magaziniervorrichtung nach einem der vorhergehenden Ansprüche, **dadurch gekennzeichnet, dass** die Aufnahmeöffnungen (20, 21; 30, 31) V-förmig ausgebildet sind.

14. Magaziniervorrichtung nach einem der vorhergehenden Ansprüche, **dadurch gekennzeichnet, dass** die stabförmigen Teile (13) jeweils ein stabförmiger Teil eines Beschlages (12) für ein Fenster, eine Tür od. dgl. sind.

15. Magaziniervorrichtung nach Anspruch 14, **dadurch gekennzeichnet, dass** die Aufnahmeöffnungen (20, 21; 30, 31) in Streifenlängsrichtung gegenseitig so beabstandet sind, dass sich benachbarte Beschläge (12) gegenseitig berühren.

16. Magaziniervorrichtung nach einem der vorhergehenden Ansprüche, **dadurch gekennzeichnet, dass** der Magazinierstreifen (14, 24, 34, 44, 54, 64) aus einem feuchtebeständigen Material wie Leichtmetall oder Kunststoff besteht.

17. Magaziniervorrichtung nach Anspruch 9, **dadurch gekennzeichnet, dass** der Deckstreifen (36) aus einem feuchtebeständigen Material wie Leichtmetall oder Kunststoff besteht.

18. Magazinierstreifen, **gekennzeichnet durch** dessen Merkmale nach einem der vorhergehenden Ansprüche.

## Claims

1. Magazining device comprising a magazining strip which is U-shaped in cross section and comprises a base and two walls having openings located opposite each other in pairs for receiving rod-shaped parts, and having a device for retraining the rod-shaped parts in the receiving openings,
**characterised in that** the retraining device (25, 35) comprises retraining elements formed on at least one of the walls (18, 19), which elements are each formed as a finger-like wall extension (27, 37, 47, 57, 67) on a connecting piece between two receiving openings (20, 21; 31, 32) which are adjacent in the longitudinal direction, and which elements can be or are each folded from a starting position in which said elements lie in a plane together with the wall (18, 19) on which they are formed, in order to firmly hold the rod-shaped parts (13) in a region between the walls (18, 19), but which elements are able to be bent back into the starting position in order to release the rod-shaped parts (13).

2. Magazining device according to claim 1, **characterised in that** the magazining strip (14, 24, 34, 44, 54, 64) is constructed so as to be punchable in one piece.

3. Magazining device according to claim 2, **characterised in that** each finger-like wall extension (27) extends from the wall thereof at an acute angle to the longitudinal direction of the strip.

4. Magazining device according to claim 2, **characterised in that** each finger-like wall extension (37, 67) extends from the wall thereof substantially at right angles to the longitudinal direction of the strip.

5. Magazining device according to claim 4, **characterised in that** each finger-like wall extension (67) has a transverse extension (67a) which is integrally formed on the free end thereof.

6. Magazining device according to any of claims 2 to 5, **characterised in that** the punched magazining strip can be reshaped by bending into the magazining strip (14, 24, 34, 44, 54, 64) having a substantially U-shaped cross section.

7. Magazining device according to any of the preceding claims, **characterised in that** the retaining device (25, 35) further comprises a cover strip (36) which can be inserted between or under the finger-like wall extensions (27, 37, 47, 57, 67).

8. Magazining device according to claim 7, **characterised in that** the finger-like wall extensions (14, 24, 34, 44, 54, 64) can be pressed against the cover strip (36).

9. Magazining device according to either claim 7 or claim 8, **characterised in that** the cover strip (36) is formed as a separate part.

10. Magazining device according to either claim 7 or claim 8, **characterised in that** the cover strip is formed as an edge strip (28) which is integrally formed on one of the walls and can be detached from the wall along a line of weakening.

11. Magazining device according to any of claims 1 to 9, **characterised in that** the finger-like wall extensions (37) are on both walls (18, 19) and are formed such that, in each case, two wall extensions which are adjacent to one another transversely to the longitudinal direction of the strip are mutually offset in the longitudinal direction of the strip by at least one wall extension width.

12. Magazining device according to any of the preceding claims, **characterised in that** the dimension of each receiving opening (31, 32) is smaller transversely to the longitudinal direction of the strip than in the longitudinal direction of the strip.

13. Magazining device according to any of the preceding claims, **characterised in that** the receiving openings (20, 21; 30, 31) are V-shaped.

14. Magazining device according to any of the preceding claims, **characterised in that** the rod-shaped parts (13) are, in each case, a rod-shaped part of a fitting (12) for a window, a door or similar.

15. Magazining device according to claim 14, **characterised in that** the receiving openings (20, 21; 30, 31) are spaced apart from one another in the longitudinal direction of the strip such that adjacent fittings (12) touch each other.

16. Magazining device according to any of the preceding claims, **characterised in that** the magazining strip (14, 24, 34, 44, 54, 64) consists of a moisture-resistant material such as light metal or plastics material.

17. Magazining device according to claim 9, **characterised in that** the cover strip (36) consists of a moisture-resistant material such as light metal or plastics material.

18. Magazining strip, **characterised by** the features thereof according to any of the preceding claims.

## Revendications

1. Dispositif de mise en magasin comprenant une bande de mise en magasin ayant une section essentiellement en forme de U comportant une base et deux parois ayant des ouvertures de réception se faisant face par paires pour la réception de pièces en forme de barres ainsi qu'un dispositif de retenue des pièces en forme de barres dans les ouvertures de réception, **caractérisé en ce que** le dispositif de retenue (25, 35) comporte des éléments de retenue formés sur au moins l'une des parois (18, 19) qui sont respectivement réalisés sous la forme d'un prolongement de paroi en forme de doigt (27, 37, 47, 57, 67) d'une traverse située entre deux ouvertures de réception (20, 21, 31, 32) voisines dans la direction longitudinale, et, qui peuvent respectivement, être repliés ou sont respectivement repliés à partir d'une position de départ dans laquelle ils sont coplanaires à la paroi (18, 19) sur laquelle ils sont formés, pour permettre de maintenir les pièces en forme de barre (13) dans une zone située entre les parois (18, 19), mais peuvent être à nouveau repliés en arrière dans la position de départ pour libérer les pièces en forme de barre (13).

2. Dispositif de mise en magasin conforme à la revendication 1,
**caractérisé en ce que**
la bande de mise en magasin (14, 24, 34, 44, 54, 64) peut être estampée en une seule pièce.

3. Dispositif de mise en magasin conforme à la revendication 2,
**caractérisé en ce que**
chacun des prolongements de paroi en forme de doigt (27) s'étend, à partir de sa paroi sous un angle aigu par rapport à la direction longitudinale de la bande.

4. Dispositif de mise en magasin conforme à la revendication 2,
**caractérisé en ce que**
chacun des prolongements de paroi en forme de doigt (37, 67) s'étend, à partir de sa paroi selon un angle essentiellement droit par rapport à la direction longitudinale de la bande.

5. Dispositif de mise en magasin conforme à la revendication 4, **caractérisé en ce que**
chacun des prolongements de paroi en forme de doigt (67) comprend un prolongement transversal (67a) formé sur son extrémité libre.

6. Dispositif de mise en magasin conforme à l'une des revendications 2 à 5,
**caractérisé en ce que**
la bande de mise en magasin estampée peut être mise en forme selon une section essentiellement en forme de U par pliage de cette bande de mise en magasin (14, 24, 34, 44, 54, 64).

7. Dispositif de mise en magasin conforme à l'une des revendications précédentes,
**caractérisé en ce que**
le dispositif de retenue (25, 35) comporte en outre une bande de recouvrement (36) pouvant être insérée entre ou au-dessous des prolongements de paroi en forme de doigt (27, 37, 47, 57, 67).

8. Dispositif de mise en magasin conforme à la revendication 7,
**caractérisé en ce que**
les prolongements de paroi en forme de doigt (14, 24, 34, 44, 54, 64) peuvent être serrés sur la bande de recouvrement (36).

9. Dispositif de mise en magasin conforme à la revendication 7 ou 8,
**caractérisé en ce que**
la bande de recouvrement (36) est réalisée sous la forme d'une pièce séparée.

10. Dispositif de mise en magasin conforme à la revendication 7 ou 8,
**caractérisé en ce que**
la bande de recouvrement est réalisée sous la forme d'une bande de bord (28) formée sur l'une des parois et pouvant être séparée de cette paroi le long d'une ligne de faiblesse.

11. Dispositif de mise en magasin conforme à l'une des revendications 1 à 9,
**caractérisé en ce que**
les prolongements de parois en forme de doigt (37) sont formés sur les deux parois (18, 19) et ce de sorte que respectivement, deux prolongements de paroi voisins transversalement à la direction longitudinale de la bande soient décalés l'un par rapport à l'autre dans la direction longitudinale de la bande d'au moins la largeur d'un prolongement de paroi.

12. Dispositif de mise en magasin conforme à l'une des revendications précédentes,
**caractérisé en ce que**
la dimension de chaque ouverture de réception (31, 32) transversalement à la direction longitudinale de la bande est plus petite que dans la direction longitudinale de la bande.

13. Dispositif de mise en magasin conforme à l'une des revendications précédentes,
**caractérisé en ce que**
les ouvertures de réception (20, 21, 30, 31) sont en forme de V.

14. Dispositif de mise en magasin conforme à l'une des revendications précédentes,
**caractérisé en ce que**
les pièces en forme de barre (13) sont respectivement une pièce en forme de barre d'une ferrure (12) pour une fenêtre, une porte ou similaire.

15. Dispositif de mise en magasin conforme à la revendication 14,
**caractérisé en ce que**
les ouvertures de réception (20, 21, 30, 31) sont mutuellement écartées dans la direction longitudinale de la bande de sorte que deux ferrures voisines (12) soient en contact.

16. Dispositif de mise en magasin conforme à l'une des revendications précédentes,
**caractérisé en ce que**
la bande de mise en magasin (14, 24, 34, 44, 54, 64) est réalisée en un matériau résistant à l'humidité tel qu'un métal léger ou un matériau synthétique.

17. Dispositif de mise en magasin conforme à la revendication 9,
**caractérisé en ce que**
la bande de recouvrement (30) est réalisée en un matériau résistant à l'humidité tel qu'un métal léger ou un matériau synthétique.

18. Bande de mise en magasin **caractérisé par** des caractéristiques conformes à l'une des revendications précédentes.
